# DEMANDE DE BREVET EUROPEEN

(11) **EP 1 387 323 A1**
(43) Date de publication de la demande: **04.02.2004**
(21) Numéro de dépôt: 02078106.8
(22) Date de dépôt: 30.07.2002
(51) Int. Cl.: G07C 9/00, G06K 19/073

(54) **Authentification par mesure biométrique du porteur d'un dispositif d'identification et/ou d'accès portable d'un système d'identification et/ou d'accès électronique**

(71) Demandeur: Omega Electronics S.A., 2500 Bienne (CH)
(72) Inventeur: Kayal, Abdul-Hamid, 2000 Neuchâtel (CH); Blondeau, Fabien, 2525 Le Landeron (CH)
(74) Mandataire: Surmely, Gérard

(57) **Abrégé**

Il est décrit un dispositif d'identification portable (1) pour système d'identification et/ou d'accès électronique comprenant un premier sous-système (10), ou module transpondeur, chargé d'opérer une identification du dispositif portable dans le système d'identification électronique, et un second sous-système (20), ou module biométrique, chargé d'opérer une vérification de l'identité, ou authentification, du porteur du dispositif d'identification portable par une mesure d'un attribut biométrique du porteur. Des moyens d'authentification (18 ; 28) sont prévus pour permettre une authentification d'au moins l'un des sous-systèmes auprès de l'autre sous-système, préférablement selon un processus d'authentification mutuelle. Le premier sous-système n'opère l'identification du dispositif portable dans le système d'identification et/ou d'accès électronique qu'après que l'identité du porteur ait été positivement vérifiée par le second sous-système et que les premier et second sous-systèmes se soient authentifiés l'un envers l'autre.

Il est également décrit un procédé d'identification d'un dispositif portable et d'authentification de son porteur.

## Description

La présente invention se rapporte de manière générale à l'authentification du porteur d'un dispositif d'identification portable d'un système d'identification électronique au moyen d'une mesure d'un attribut biométrique du porteur (par ex. une empreinte digitale, vocale, rétinienne ou équivalente). La présente invention se rapporte plus particulièrement à ce type d'authentification appliquée dans un système d'identification électronique sans contact. La présente invention se rapporte également à un procédé d'identification d'un dispositif portable et d'authentification de son porteur.

Les systèmes d'identification et/ou d'accès électronique sans contact (on parlera ci-après par simplification de « système d'identification électronique » et de « dispositif d'identification portable »), notamment les systèmes connus sous l'appellation système RFID (Radio Frequency Identification), emploient communément des dispositifs d'identification et/ou d'accès portables coopérant avec des unités d'interrogation ou lecteurs. Ces dispositifs d'identification portables se présentent sous des formes variées. On les trouve notamment sous forme de cartes ou incorporés dans des objets portables tels des montres-bracelets, des clefs ou autres accessoires (on pensera notamment aux dispositifs d'identification employés dans l'industrie automobile ou à des produits horlogers du type du produit Swatch Access^{TM} commercialisé par la société Swatch).

Les dispositifs d'identification portables utilisés dans les systèmes d'identification susmentionnés comportent communément un circuit transpondeur (également dénommé « tag» ou « étiquette électronique ») constitué essentiellement d'une mémoire stockant un identifiant unique du dispositif (ou code d'identification), d'une interface de communication permettant la lecture de l'identifiant unique au moyen d'une unité d'interrogation externe, et de moyens de contrôle assurant des fonctions de base, tels la gestion de la mémoire, le contrôle de l'interface de communication et l'exécution éventuelle de commandes (par exemple la mise en éveil ou veille du tag, la lecture ou l'écriture de données en mémoire, etc.). Ce circuit transpondeur est communément incorporé dans un objet portable (telle une carte, une montre-bracelet ou tout autre accessoire, comme mentionné plus haut) et peut ou non posséder une liaison fonctionnelle avec une électronique périphérique, tel un microprocesseur chargé d'opérations qui ne sont pas nécessairement liées aux opérations d'identification.

Dans les systèmes d'identification dits RFID, l'interrogation des étiquettes électroniques est typiquement opérée par transmission de signaux radio-fréquences, le code d'identification étant transmis sur une porteuse radio-fréquence par des techniques de modulations variées. Une fois le code d'identification lu par l'unité d'interrogation, cette dernière est par exemple agencée pour autoriser ou non l'accès à un lieu sécurisé (par exemple l'accès à des installations ou infrastructures sensibles), autoriser ou non l'accès à des informations protégées (par exemple l'accès à des données informatiques stockées sur un terminal local ou distant) ou encore activer ou non un système ou dispositif associé (par exemple activer l'allumage d'une automobile). L'unité d'interrogation peut également être agencée pour contrôler et gérer des flux d'argent ou le débit d'un compte. Dans ce dernier cas, on pense notamment aux applications où les dispositifs d'identifications sont utilisés comme cartes de crédit, de débit ou d'autre moyen de paiement.

Dans les applications connues susmentionnées, les dispositifs d'identification portables sont ainsi identifiés auprès du système par leur code d'identification. Selon les cas, des transactions ultérieures entre l'unité d'interrogation et chaque dispositif d'identification portable peuvent être entreprises et des moyens de cryptage peuvent être mis en oeuvre pour assurer un certain degré de sécurité lors des communications.

Des moyens supplémentaires doivent toutefois être mis en oeuvre pour éviter l'utilisation frauduleuse d'un dispositif d'identification portable qui aurait été volé ou perdu. Une solution envisageable peut consister en l'adjonction d'un mécanisme de protection par code PIN (Personal Identification Number) par lequel le porteur du dispositif est amené à s'authentifier par l'introduction d'un code PIN sur le dispositif portable directement ou sur l'unité d'interrogation. Cette technique n'est toutefois pas entièrement satisfaisante car l'introduction d'un code PIN par l'utilisateur peut être observée relativement aisément par des tiers. Ce mécanisme nécessite par ailleurs la mémorisation par l'utilisateur du code PIN, ce qui peut s'avérer rébarbatif.

Une autre solution consiste en la fourniture de moyens de mesure d'un attribut biométrique (par ex. une empreinte digitale, vocale, rétinienne ou équivalente) du porteur du dispositif d'identification portable. Cette solution consiste typiquement à pourvoir le dispositif portable ou l'unité d'interrogation d'un capteur et de moyens de traitement associés permettant de mesurer cet attribut biométrique et de le comparer avec des composantes caractéristiques pré-mémorisées de cet attribut.

Il est ainsi déjà connu d'utiliser des capteurs d'empreintes digitales pour permettre l'authentification d'un utilisateur. La société ATMEL commercialise par exemple un tel capteur sous la dénomination AT77C101B FingerChip^{TM}. Ce type de capteur est typiquement couplé à des moyens de traitement adéquats pour extraire les informations ou composantes caractéristiques de l'empreinte digitale mesurée et pour comparer ces composantes avec des composantes caractéristiques pré-enregistrées de l'utilisateur.

Ces capteurs biométriques sont communément placés sur des terminaux fixes ou éventuellement portables. La demande internationale WO 87/02491 présente par exemple un dispositif personnel d'identification et d'authentification pouvant être muni d'un capteur pour la mesure d'une empreinte digitale du porteur. Le mode de fonctionnement exact de ce dispositif n'est pas décrit en détail dans ce document. On peut néanmoins déduire des figures que l'architecture de l'ensemble du dispositif se présente sous la forme d'un unique système où toutes les fonctionnalités sont regroupées en un seul module.

La demande de brevet US 2002/0060243 A1 décrit un dispositif d'authentification biométrique pour une utilisation avec un dispositif de télécommunication mobile. Ce dispositif d'authentification biométrique est utilisé simplement comme interface entre l'utilisateur et le dispositif de télécommunication mobile pour autoriser ou non l'utilisation de ce dernier.

On notera qu'un désavantage des solutions consistant à simplement intégrer un capteur biométrique dans un dispositif portable réside dans le fait qu'il est relativement aisé d'outrepasser cette sécurité et de court-circuiter l'étape d'authentification du porteur. En effet, de par sa nature portable, le dispositif peut être manipulé et modifié par tout tiers malintentionné avec une relative facilité. La plupart des applications implémentant une authentification biométrique de l'utilisateur font de ce fait plutôt appel à des capteurs biométriques placés sur des bornes fixes dont le contrôle est plus aisé à assurer par les opérateurs des systèmes concernés.

Un but général de la présente invention est d'accroître le degré de sécurité des systèmes d'identification électroniques (en particulier des systèmes d'identification électroniques sans contact) par l'adjonction d'une authentification biométrique du porteur. Plus particulièrement, la présente invention vise à améliorer le degré de sécurité de tels systèmes d'identification électroniques en munissant les dispositifs portables d'identification (ou transpondeurs) de moyens permettant d'authentifier directement le porteur par une mesure et une reconnaissance d'un attribut biométrique de ce porteur.

Un autre but de la présente invention est de proposer un dispositif portable d'identification incorporant toutes les fonctionnalités permettant la mesure et la reconnaissance d'un attribut biométrique du porteur, tout en assurant que ce dispositif portable ne puisse être manipulé de manière frauduleuse de manière à outrepasser ce processus authentification.

La présente invention a ainsi pour objet un dispositif d'identification portable pour système d'identification électronique dont les caractéristiques sont énoncées dans la revendication 1.

La présente invention a également pour objet un procédé d'identification d'un dispositif d'identification portable et d'authentification de son porteur dans un système d'identification électronique, notamment un système d'identification électronique sans contact, dont les caractéristiques sont énoncées dans la revendication 8.

Des modes de réalisation avantageux de la présente invention font l'objet des revendications dépendantes.

Un avantage de la présente invention réside dans le fait que le dispositif d'identification portable est muni de deux sous-systèmes interdépendants, le premier de ces sous-systèmes, ou module transpondeur, étant chargé de l'identification du dispositif portable en tant que tel au sein du système d'identification électronique, et le deuxième sous-système, ou module biométrique, étant chargé de l'authentification biométrique du porteur.

Une particularité de la présente invention réside dans le fait que le module biométrique opère une authentification du porteur auprès du dispositif portable et s'authentifie par la suite lui-même auprès du module transpondeur. En d'autres termes, l'authentification biométrique du porteur ne constitue qu'une étape préliminaire qui, à elle-seule, ne suffit pas à déclencher le processus d'identification du module transpondeur dans le système d'identification électronique. Une étape ultérieure et nécessaire afin de déclencher le processus d'identification consiste, selon la présente invention, en une authentification, préférablement mutuelle, du module biométrique et du module transpondeur l'un auprès de l'autre. C'est seulement à la condition que les deux étapes susmentionnées conduisent à des réponses positives que le processus d'identification du module transpondeur dans le système d'identification électronique peut être lancé.

L'étape d'authentification des deux sous-systèmes l'un auprès de l'autre assure qu'aucune action frauduleuse ne peut être entreprise pour court-circuiter l'authentification biométrique du porteur. En effet, selon la présente invention, il n'est plus possible, ou tout du moins fortement difficle, d'outrepasser le processus d'authentification du porteur et de simuler la présence d'un utilisateur autorisé, car le processus d'authentification entre les deux sous-systèmes ne pourrait alors être valablement exécuté.

Un avantage de la présente invention, lié au fait que l'authentification du porteur est réalisée sur le dispositif portable et non sur le terminal ou l'unité de lecture, réside dans le fait que l'on évite de la sorte de laisser les empreintes de l'utilisateur sur un terminal fixe du système, ce qui représente une protection contre la fraude, notamment par reproduction ou duplicata des empreintes de l'utilisateur.

Un autre avantage de la présente invention réside dans le fait qu'elle assure une sécurité accrue contre l'espionnage par des tiers. En effet, selon l'invention, seule une « autorisation » (par exemple un code d'identification ou d'accès) est transmise du dispositif portable vers le terminal ou l'unité de lecture, et non les données de l'empreinte du porteur.

En outre, compte tenu du fait que les données biométriques relatives au porteur sont stockées dans le dispositif portable (et non dans le terminal fixe), on assure de la sorte que :
a) dans le cas où des données simplifiées sont stockées pour représenter l'attribut biométrique du porteur (typiquement huit points de correspondance dans une empreinte sont légalement admis pour déterminer s'il y a correspondance ou non), le risque statistique d'erreur d'authentification est réduit, chaque utilisateur possédant un dispositif portable qui lui est propre ; et
b) les coûts des terminaux fixes (ou unités de lecture) sont réduits, les capacités de traitement et de mémorisation étant reportées sur chaque dispositif portable.

D'autres caractéristiques et avantages de la présente invention apparaîtront plus clairement à la lecture de la description détaillée qui suit, faite en référence aux dessins annexés donnés à titre d'exemples non limitatifs et dans lesquels ;
- la figure 1 est un schéma bloc d'un dispositif d'identification portable selon un mode de réalisation de la présente invention ;
- la figure 2 est un schéma bloc illustrant un exemple d'un processus d'authentification mutuelle entre les deux sous-systèmes du dispositif d'identification portable de la figure 1 ; et
- la figure 3 est un diagramme illustrant un mode de mise en oeuvre d'un procédé d'identification d'un dispositif d'identification portable et de son porteur selon la présente invention.

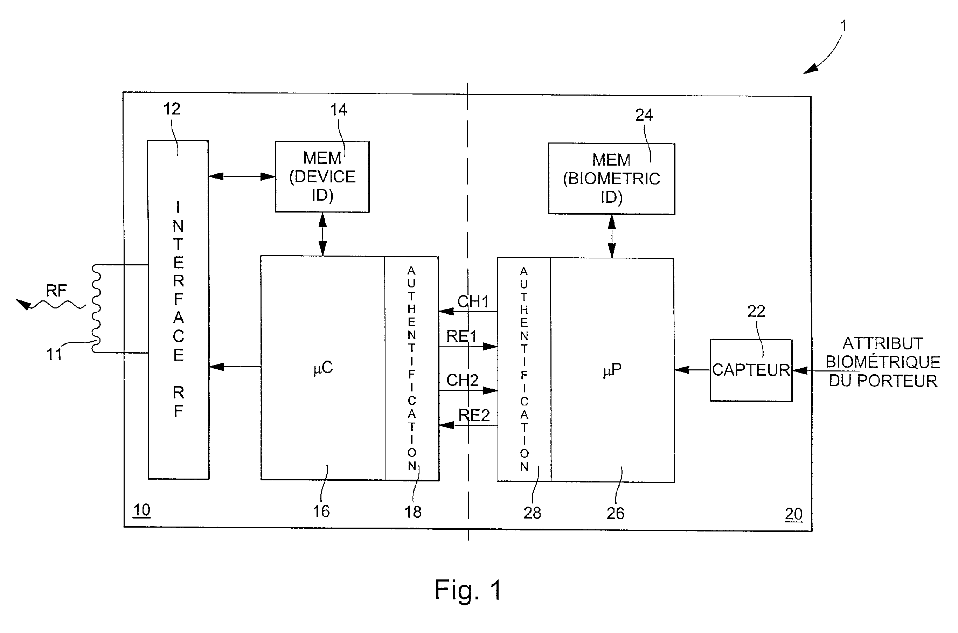

La figure 1 montre un mode de réalisation d'un dispositif d'identification portable selon l'invention, désigné globalement par la référence numérique 1. Ce dispositif d'identification 1 se compose essentiellement de deux sous-système ou modules 10, 20. On notera que d'autres modules non-illustrés pourraient être incorporés dans le dispositif 1. En particulier, dans l'éventualité d'une implémentation du dispositif d'identification dans une pièce d'horlogerie, telle une montre-bracelet, le dispositif pourrait en outre comprendre des composants dédiés à la production et l'affichage d'informations horaires (par ex. circuit oscillateur, chaîne de division de fréquence, dispositif d'affichage, etc.).

Le premier sous-système, désigné par la référence numérique 10, est un module chargé d'opérer une identification du dispositif portable dans ledit système d'identification électronique, ce premier sous-système 10 comprenant des moyens de mémorisation 14 (notamment, d'un code d'identification unique, désigné DEVICE ID, du dispositif d'identification portable) - par ex. une EEPROM -, une interface de communication 12 pour assurer l'échange de données entre le dispositif d'identification portable 1 et au moins une unité externe d'interrogation (non illustrée), et des moyens de contrôle 16 pour commander la mémoire 14 et l'interface de communication 12. Le premier sous-système 10, également dénommé module transpondeur, est préférablement un circuit transpondeur de type passif d'un système d'identification électronique sans contact, par exemple un système d'identification RFID. Par « passif », on entend un circuit transpondeur dont l'alimentation est dérivée du champ électromagnétique d'interrogation produit par l'unité externe d'interrogation et qui ne nécessite en conséquence pas de source d'alimentation propre. L'invention n'est bien évidemment pas limitée à ce seul type de circuit transpondeur.

Dans la figure 1, l'interface 12 est ainsi munie d'une antenne 11 (illustrée dans cet exemple sous la forme d'une inductance) pour permettre la communication par signaux radio-fréquence avec une unité externe d'interrogation. On notera que le dispositif d'identification portable pourrait alternativement être conçu comme un dispositif d'identification à contact, auquel cas, l'interface 12 et son antenne 11 seraient remplacées par un jeu de contacts accessibles depuis l'extérieur. De par sa flexibilité d'utilisation, le dispositif sans contact illustré dans la figure 1 reste néanmoins le mode de réalisation préféré.

Par ailleurs, d'autres solutions permettant d'assurer une liaison sans contact entre le dispositif d'identification portable et une unité externe d'interrogation existent. Une telle communication sans contact peut par exemple alternativement être réalisée par une communication optique (par exemple du type IrDa) ou encore acoustique.

Le second sous-système, ou module biométrique, désigné par la référence numérique 20, est un module chargé d'opérer une vérification de l'identité du porteur du dispositif d'identification portable 1, ce second sous-système 20 comprenant un capteur 22 susceptible de mesurer au moins un attribut biométrique du porteur, des moyens de mémorisation 24 de composantes caractéristiques, regroupées sous la dénomination BIOMETRIC ID, de l'attribut biométrique du porteur, et des moyens de traitement 26 pour traiter l'attribut biométrique mesuré par le capteur 22 et le comparer avec les composantes caractéristiques mémorisées. Ce second sous-système 20 dispose de sa propre source d'alimentation en énergie électrique (non illustrée). A ce propos, on notera que cette source d'alimentation pourrait également alimenter le module transpondeur 10 ou tout autre composant du dispositif portable 1.

Le capteur 22 est préférablement un capteur d'une empreinte digitale, rétinienne, vocale ou génétique du porteur (ou de tout autre attribut physique ou physiologique du porteur). Comme déjà mentionné en préambule, il existe divers exemples de capteurs biométriques dont notamment les capteurs d'empreintes digitales qui sont les plus répandus. Un exemple déjà mentionné d'un capteur d'empreinte digitale est par exemple commercialisé par la société ATMEL sous la dénomination AT77C101B FingerChip^{TM}. On ne s'attardera en conséquence pas ici sur la conception des capteurs biométriques ou le fonctionnement des moyens de traitement associés permettant la reconnaissance de l'attribut biométrique mesuré. On précisera simplement que, selon la présente invention, les moyens de traitement 26 du module biométrique 20 sont munis de moyens d'authentification (désignés 18 et 28), au même titre que les moyens de contrôle 16 du module transpondeur 10, ceci dans le but de permettre une authentification de l'un au moins de deux sous-systèmes auprès de l'autre sous-système. Préférablement, le processus d'authentification des deux sous-systèmes 10, 20 est opéré selon un processus d'authentification mutuelle qui sera plus amplement décrit dans la suite de la présente description.

Selon l'invention, on notera de manière générale qu'il est prévu que le module transpondeur 10 n'opère l'identification du dispositif portable 1 dans le système d'identification électronique (selon un processus en tant que tel connu) qu'après que l'identité du porteur ait été positivement vérifiée par le module biométique 20 et que les premier et second sous-systèmes se soient authentifiés l'un envers l'autre.

Selon la présente invention, les processus (i) d'authentification de l'utilisateur auprès du dispositif portable, (ii) d'authentification des deux sous-systèmes l'un envers l'autre, et (iii) d'identification du dispositif portable dans le système sont intimement liés et interdépendants de sorte que le degré de sécurité est sensiblement accru.

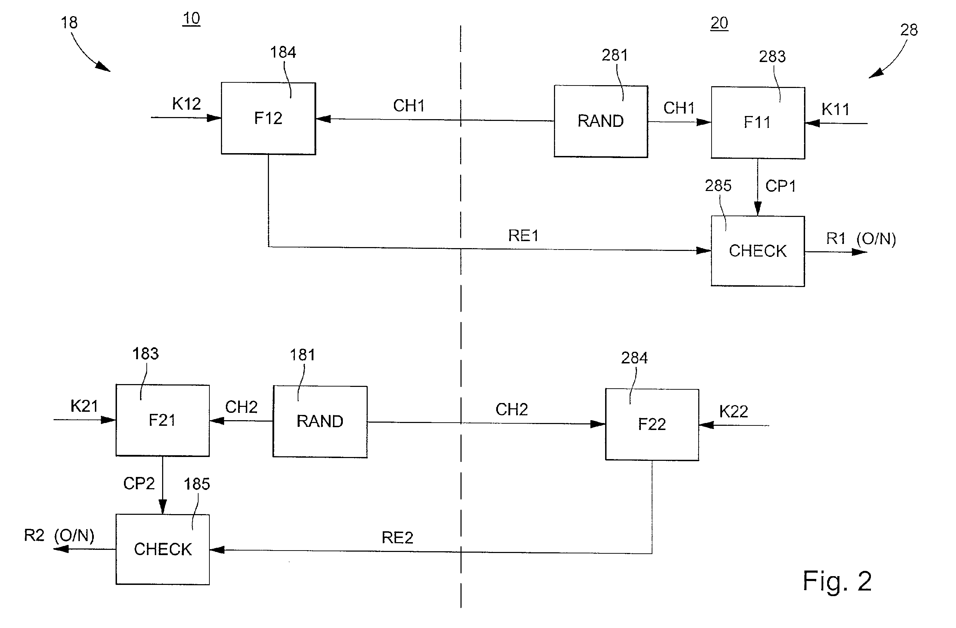

La figure 2 présente un schéma bloc illustrant un exemple préféré du processus d'authentification mis en oeuvre pour réaliser une authentification mutuelle des deux sous-systèmes 10, 20 du dispositif portable 1. Dans cette figure 2, on a uniquement illustré schématiquement les moyens d'authentification 18, 28 des deux sous-systèmes. On notera que l'authentification des deux sous-systèmes est réalisé selon un processus d'authentification mutuelle de type « challenge and response » par lequel le premier sous-système s'authentifie auprès du second sous-système et inversement.

Dans ce but, les moyens d'authentification 18, 28 de chaque sous-système comportent un circuit générateur 181, respectivement 281, pour générer un nombre aléatoire, désigné CH2 respectivement CH1. Ce nombre aléatoire CH1, CH2 ou « challenge » est notamment transmis à l'autre sous-système devant être authentifié. Les moyens d'authentification 18, 28 comprennent par ailleurs chacun des premiers et seconds moyens de calcul, respectivement 183, 184 et 283, 284 pour appliquer des fonctions déterminées (ou algorithmes) à ces nombres aléatoires CH1 et CH2.

Plus exactement, les premiers moyens de calculs 283 du second sous-système 20 génèrent un premier paramètre, désigné CP1, résultant de l'application d'une première fonction déterminée F11 au nombre aléatoire CH1 généré par le circuit générateur 281 et à une première clé déterminée K11. Inversement, les premiers moyens de calculs 183 du premier sous-système génèrent un premier paramètre, désigné CP2, résultant de l'application d'une première fonction déterminée F21 au nombre aléatoire CH2 généré par le circuit générateur 181 et à une première clé déterminée K21.

De manière similaire, les seconds moyens de calculs 184 du premier sous-système 10 génèrent un second paramètre ou « response », désigné RE1, résultant de l'application d'une seconde fonction déterminée F12 au nombre aléatoire ou challenge CH1 transmis par le second sous-système 20 et à une seconde clé déterminée K12, ce second paramètre RE1 étant retransmis au second sous-système 20. Il en va à nouveau de même pour les seconds moyens de calculs 284 du second sous-système 20 qui génèrent le paramètre ou « response » RE2 résultant de l'application de la seconde fonction déterminée F22 au nombre aléatoire ou challenge CH2 transmis par le premier sous-système 10 et à une seconde clé déterminée K22, ce paramètre RE2 étant également retransmis au premier sous-système 10.

Chacun des moyens d'authentification 18, 28 comportent en outre des moyens de vérification 185, 285 pour produire un résultat d'authentification respectivement R2, R1 sur la base d'une comparaison entre le premier paramètre CP2, CP1 généré par les premiers moyens de calcul 183, 283 et le second paramètre RE2, RE1 transmis par l'autre sous-système.

En résumé, on aura compris que chaque sous-système envoie un « challenge » à l'autre sous-système, lequel applique une fonction à ce « challenge » et renvoie sa réponse (« response ») à l'autre sous-système. Le sous-système d'origine génère lui-même la réponse valide (la réponse qu'il devrait recevoir) et la compare à la réponse transmise par l'autre sous-système.

Les fonctions F11, F12, F21 et F22 utilisées sont des algorithmes connus du type DES (Data Encryption Standard) ou RSA (Rivest Shamer Adelman) ou des algorithmes spécifiques. On notera en outre que les fonctions F11 et F12 utilisées par les sous-systèmes, ainsi que les clés associés K11, K12 sont typiquement identiques. Il en va typiquement de même pour les fonctions F21 et F22 et les clés K21, K22.

On notera que le processus d'authentification mutuelle illustré schématiquement dans la figure 2 n'est nullement limitatif et que ce processus d'authentification peut subir diverses modifications.

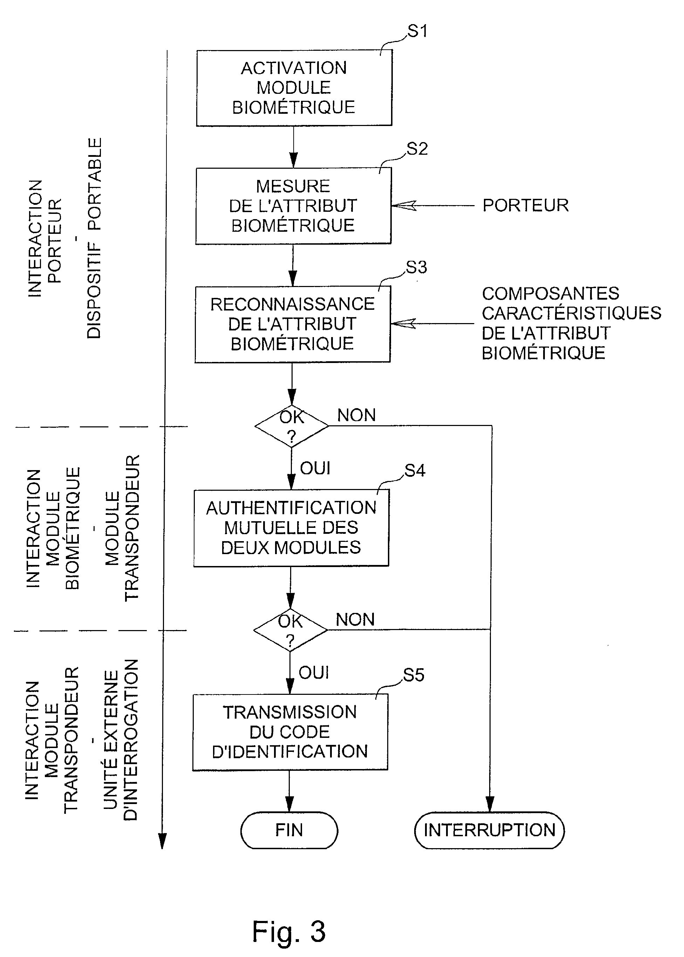

Un mode de mise en oeuvre du procédé d'authentification d'un dispositif d'identification portable (tel qu'illustré dans la figure 1) et d'authentification de son porteur, selon l'invention, va maintenant être présenté en référence à la figure 3. Ce mode de mise en oeuvre débute par l'activation (étape S1) du second sous-système 20. Cette activation peut avantageusement faire suite à l'interrogation du dispositif d'identification par une unité externe d'interrogation. La mesure de l'attribut biométrique du porteur (par ex. son empreinte digitale) est ensuite effectuée à l'étape S2 et la reconnaissance de cet attribut biométrique, au moyen des composantes caractéristiques pré-enregistrées, est opérée à l'étape S3. Dans l'éventualité où la comparaison de l'attribut biométrique mesuré avec les composantes caractéristiques pré-enregistrées est positive, le processus se poursuit à l'étape S4. Dans le cas contraire, le processus est interrompu et aucune identification du dispositif portable auprès du système d'identification n'est entreprise.

L'étape S4 consiste en une authentification, préférablement mutuelle, des deux sous-systèmes, par exemple selon le processus décrit en référence à la figure 2 ou selon tout autre processus d'authentification adéquat. Dans l'éventualité où l'étape S4 débouche sur un résultat négatif (par exemple en cas d'intervention frauduleuse sur le dispositif d'identification portable), il est à nouveau procédé à l'interruption du processus de manière à ce qu'aucune identification du dispositif portable ne soit entreprise auprès du système d'identification, en l'occurrence auprès de l'unité externe d'interrogation correspondante,

Dans l'affirmative, par contre, il est procédé, à l'étape S5, au processus d'identification en tant que tel du dispositif d'identification portable. Ce processus consiste par exemple communément en une transmission de l'identifiant unique du dispositif portable à destination de l'unité externe d'interrogation du système d'identification électronique.

En se référant à la figure 3, on peut à nouveau constater que les processus (i) d'authentification de l'utilisateur auprès du dispositif portable (étapes S1 à S3), (ii) d'authentification des deux sous-systèmes l'un envers l'autre (étape S4), et (iii) d'identification du dispositif portable dans le système (étape S5) sont intimement liés et interdépendants. Dans une première phase, l'utilisateur interagit avec le module biométrique. Dans une seconde phase, le module biométrique interagit avec le module transpondeur. Enfin, dans une phase ultime, le module transpondeur interagit avec le système d'identification électronique à proprement parler.

On comprendra que diverses modifications et/ou améliorations évidentes pour l'homme du métier peuvent être apportées aux modes de réalisation décrits dans la présente description sans sortir du cadre de l'invention défini par les revendications annexées. En particulier, on rappellera que, bien que la présente invention soit particulièrement intéressante dans l'optique d'une implémentation dans un système d'identification électronique sans contact, le dispositif et le procédé revendiqués peuvent être appliqué dans tout autre type de système d'identification électronique, qu'il implique ou non un contact direct entre le dispositif d'identification portable et une unité externe d'interrogation.

## Revendications

1. Dispositif d'identification portable (1) pour système d'identification et/ou d'accès électronique comprenant :
- un premier sous-système (10), ou module transpondeur, chargé d'opérer une identification dudit dispositif portable (1) dans ledit système d'identification et/u d'accès électronique, ce premier sous-système (10) comprenant notamment des moyens de mémorisation (14) d'un code d'identification unique (DEVICE ID) dudit dispositif d'identification portable, une interface de communication (12) pour assurer l'échange de données entre ledit dispositif d'identification portable (1) et au moins une unité externe d'interrogation, et des moyens de contrôle (16) pour commander ladite mémoire (14) et ladite interface de communication (12) ; et
- un second sous-système (20), ou module biométrique, chargé d'opérer une vérification de l'identité, ou authentification, du porteur dudit dispositif d'identification portable (1), ce second sous-système (20) comprenant un capteur (22) susceptible de mesurer au moins un attribut biométrique dudit porteur, des moyens de mémorisation (24) de composantes caractéristiques (BIOMETRIC ID) de l'attribut biométrique du porteur, et des moyens de traitement (26) pour traiter ledit attribut biométrique mesuré par le capteur (22) et le comparer avec lesdites composantes caractéristiques mémorisées,
**caractérisé en ce que** lesdits premier et second sous-systèmes (10 ; 20) comportent chacun des moyens d'authentification (18 ; 28) pour permettre une authentification d'au moins l'un desdits sous-systèmes auprès de l'autre sous-système,
ledit premier sous-système (10) n'opérant l'identification dudit dispositif portable (1) dans le système d'identification et/ou d'accès électronique qu'après que l'identité du porteur ait été positivement vérifiée par ledit second sous-système (20) et que lesdits premier et second sous-systèmes se soient authentifiés l'un envers l'autre.

2. Dispositif d'identification selon la revendication 1, **caractérisé en ce que** ledit capteur (22) du second sous-système (20) est un capteur d'une empreinte digitale, rétinienne, vocale ou génétique dudit porteur.

3. Dispositif d'identification selon la revendication 1, **caractérisé en ce que** ladite interface de communication (12) du premier sous-système (10) est une interface de communication radio-fréquence pour la communication dans un système d'identification électronique sans contact ou système RFID.

4. Dispositif d'identification selon la revendication 1, **caractérisé en ce que** l'authentification des premier et second sous-systèmes est opérée selon un processus d'authentification mutuelle où le premier sous-système (10) s'authentifie auprès du second sous-système et inversement.

5. Dispositif d'identification selon la revendication 4, **caractérisé en ce que** ledit processus d'authentification mutuelle est un processus de type « challenge and response ».

6. Dispositif d'identification selon la revendication 5, **caractérisé en ce que** les moyens d'authentification (28 ; 18) de chaque sous-système comportent :
un circuit générateur (281 ; 181) d'un nombre aléatoire (CH1 ; CH2) qui est transmis à l'autre sous-système ;
des premiers moyens de calcul (283 ; 183) pour générer un premier paramètre (CP1 ; CP2) résultant de l'application d'une première fonction déterminée (F11 ; F21) au dit nombre aléatoire (CH1 ; CH2) généré par le circuit générateur (281 ; 181) et à une première clé déterminée (K11 ; K21) ;
des seconds moyens de calcul (284 ; 184) pour générer un second paramètre (RE2 ; RE1) résultant de l'application d'une seconde fonction déterminée (F22 ; F12) au nombre aléatoire (CH2 ; CH1) transmis par l'autre sous-système et à une seconde clé déterminée (K22 ; K12), ce second paramètre (RE2 ; RE1) étant transmis à l'autre sous-système ; et
des moyens de vérification (285 ; 185) pour produire un résultat d'authentification (R1 ; R2) sur la base d'une comparaison entre le premier paramètre (CP1 ; CP2) généré par lesdits premiers moyens de calcul (283 ; 183) et le second paramètre (RE1 ; RE2) transmis par l'autre sous-système.

7. Dispositif d'identification selon l'une quelconque des revendications 1 à 6, **caractérisé en ce que** ledit premier sous-système (10) est un module transpondeur de type passif pour système d'identification électronique sans contact.

8. Dans un système d'identification et/ou d'accès électronique, notamment un système d'identification électronique sans contact, procédé d'identification d'un dispositif d'identification portable et d'authentification de son porteur,
le dispositif d'identification portable comprenant un premier sous-système (10), ou module transpondeur, chargé d'opérer une identification dudit dispositif portable (1) dans ledit système d'identification et/ou d'accès électronique, et un second sous-système (20), ou module biométrique, chargé d'opérer une vérification de l'identité, ou authentification, du porteur dudit dispositif d'identification portable (1) par une mesure d'un attribut biométrique dudit porteur,
**caractérisé en ce que** ce procédé comporte les étapes suivantes ;
a) activation dudit second sous-système (20) ;
b) mesure d'un attribut biométrique du porteur au moyen dudit second sous-système (20) ;
c) comparaison dudit attribut biométrique mesuré avec des composantes caractéristiques pré-mémorisées ;
d) si l'étape de comparaison c) est positive, authentification d'au moins l'un desdits premier et second sous-systèmes auprès de l'autre sous-système ;
e) si l'étape d'authentification d) est positive, identification dudit dispositif d'identification portable auprès d'au moins une unité externe d'interrogation dudit système d'identification électronique.

9. Procédé selon la revendication 8, **caractérisé en ce que** ladite étape d'authentification d) consiste en une authentification mutuelle desdits premier et second sous-systèmes selon un processus « challenge-response ».

10. Procédé selon la revendication 8 ou 9, **caractérisé en ce que** lesdites étapes a) à e) sont exécutées suite à une interrogation dudit dispositif d'identification portable par l'unité externe d'interrogation.
